# EUROPÄISCHE PATENTSCHRIFT

(11) **EP 1 498 920 B1**
(45) Veröffentlichungstag und Bekanntmachung des Hinweises auf die Patenterteilung: **31.10.2012**
(21) Anmeldenummer: 04015466.8
(22) Anmeldetag: 01.07.2004
(51) Int. Cl.: H01G 9/025

(54) **Polythiophene mit Alkylenoxythiathiopen-Einheiten in Elektrolytkondensatoren**
Electrolytic capacitors having polythiophene with alkylenoxythiathiopen units
Polythiophène avec des unités alkylenoxythiathiopene dans des condensateurs électrolytiques

(30) Priorität: 14.07.2003 DE 10331673
(43) Veröffentlichungstag der Anmeldung: 19.01.2005
(73) Patentinhaber: Heraeus Precious Metals GmbH & Co. KG, 63450 Hanau (DE)
(72) Erfinder: Reuter, Knud, 47800 Krefeld (DE); Merker, Udo, 50679 Köln (DE); Jonas, Friedrich, 52066 Aachen (DE)
(74) Vertreter: Herzog, Martin

(56) Entgegenhaltungen:
- EP-A2- 0 340 512
- JP-A- 2000 021 687
- BLANCHARD PH ET AL: "Thieno[3,4-b]-1,4-oxathiane: An Unsymmetrical Sulfur Analogue of 3,4-Ethylenedioxythiophene (EDOT) as a Building Block for Linear pi-Conjugated Systems" ORGANIC LETTERS, Bd. 4, Nr. 4, 26. Januar 2002 (2002-01-26), Seiten 607-609, XP002415433 ACS, WASHINGTON, DC, US ISSN: 1523-7060
- JONAS F ET AL: "TECHNICAL APPLICATIONS FOR CONDUCTIVE POLYMERS" ELECTROCHIMICA ACTA, ELSEVIER SCIENCE PUBLISHERS, BARKING, GB, Bd. 39, Nr. 8/9, 1. Juni 1994 (1994-06-01), Seiten 1345-1347, XP000570304 ISSN: 0013-4686

## Beschreibung

Die Erfindung betrifft Elektrolytkondensatoren mit Polythiophenen enthaltend Alkylenoxythiathiophen-Einheiten, deren Herstellung sowie die Verwendung solcher Polythiophene oder Dispersionen enthaltend diese zur Herstellung von leitfähigen Schichten.

Die Verbindungsklasse der π-konjugierten Polymere war in den letzten Jahrzehnten Gegenstand zahlreicher Veröffentlichungen. Sie werden auch als leitfähige Polymere oder als synthetische Metalle bezeichnet.

Leitfähige Polymere gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte π-konjugierte Polymere sind-Polypyrrole, Polythiophene, Polyaniline, Polyacetylene, Polyphenylene und Poly(p-phenylen-vinylene).

Ein besonders wichtiges und technisch genutztes Polythiophen ist das Poly-3,4-(ethylen-1,2= dioxy)thiophen, oft auch als Poly(3,4-ethylendioxythiophen) bezeichnet, das in seiner oxidierten Form sehr hohe Leitfähigkeiten aufweist und beispielsweise in der EP-A 339 340 beschrieben ist. Eine Übersicht über zahlreiche Poly(alkylendioxythiophen)-Derivate, insbesondere Poly-(3,4-ethylendioxythiophen)-Derivate, deren Monomerbausteine, Synthesen und Anwendungen gibt L. Groenendaal, F. Jonas, D. Freitag, H. Pielartzik & J. R. Reynolds, Adv. Mater. 12 (2000) 481-494.

In der europäischen Patentschrift EP-A 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

In JP-A 2000-021687 wird beschrieben, dass sich das Hochfrequenzverhalten von Elektrolytkondensatoren durch den Einsatz von Poly(3,4-ethylendithiathiophen) als Feststoffelektrolyt verbessern lässt. 3,4-Ethylendithiathiophen hat jedoch den Nachteil einer schwierigen Herstellung (Lit.: C. Wäng, J. L. Schindler, C. R. Kannewurf und M. G. Kanatzidis, Chem. Mater. 1995, 7, 58 - 68). Die Synthese verläuft gemäß dieser Literaturvorschrift - ausgehend von 3,4-Dibromthiophen - nur mit einer Gesamtausbeute von 19 %, wobei Verfahrensnachteile wie Reaktionsführung bei -78°C, Verwendung sehr feuchtigkeitsempfindlicher Reagenzien wie n-Butyllithium und metallischem Kalium sowie von hochentzündlichem und giftigem Schwefelkohlenstoff in Kauf genommen werden müssen. Zwar kann 3,4-Ethylendithiathiophen auch aus 3,4-Dialkoxythiophenen und 1,2-Dimercaptoethan nach dem Prinzip der Umetherung hergestellt werden, doch entstehen dabei auch extrem stark riechende schwefelhaltige Produkte, die die Praktikabilität dieses Syntheseweges und die Verwendung des Produktes sehr stark einschränken. Außerdem zeigen die Untersuchungen gemäß obiger Lit., dass mit 3,4-Ethylendithiathiophen Polythiophene mit nur mäßiger Leitfähigkeit von 0,1 S/ cm (als Tetrachloroferrat) bzw. 0,4 S/cm (als elektrochemisch hergestelltes Polymer) hergestellt werden konnten. Höhere Leitfähigkeiten sind jedoch für eine weitere Verbesserung des Hochfrequenzverhaltens wünschenswert. Im Vergleich dazu ergeben sich für Polythiophen aus Ethylendioxythiophen folgende Werte: 5 - 31 S/cm (als Tetrachloroferrat), siehe Lit. F. Jonas, G. Heywang, Electrochimica Acta 39 (8/9), S. 1345 - 1347 (1994) und 200 S/cm (elektrochemisch hergestellt), gleiche Literatur. Der Reststrom von Elektrolytkondensatoren mit polymeren Feststoffelektrolyten ist etwa 10-fach höher als in Elektrolytkondensatoren mit Mangandioxid als Feststoffelektrolyt (I. Horacek et al., Proceedings of the 15th European Passive Components Symposium CARTS-Europe 2001, Copenhagen, Denmark, p.24-29). Die hohen Stromverluste führen beispielsweise in mobilen Elektronikanwendungen zu einer früheren Erschöpfung der Batterie. Es ist wünschenswert, den Reststrom von Elektrolytkondensatoren mit polymeren Feststoffelektrolyten zu senken.

Es bestand daher weiterhin Bedarf an geeigneten elektrisch leitfähigen Polymeren, welche sich als Feststoffelektrolyte in Elektrolytkondensatoren eignen, wobei der Reststrom im Vergleich zu bekannten Polymeren, wie beispielsweise Poly(3,4-ethylendioxythiophen) und Poly(3,4-ethylendithiathiophen), verbessert werden soll.

Eine Aufgabe bestand daher darin, Elektrolytkondensatoren enthaltend solche elektrisch leitfähigen Polymere als Feststoffelektrolyte bereitzustellen.

Roncali et al. beschreibt in Org. Lett. 4 (4), 2002, S. 607 - 609 die Herstellung von 3,4-Ethylenoxythiathiophen (Thieno[3,4-b]-1,4-oxathian, EOTT) und dessen elektrochemische Polymerisation zu Poly(3,4-ethylenoxythiathiophen) (PEOTT). Durch Vergleich mit den entsprechenden Dioxy - und Dithia-Analoga zeigt sich, dass der Ersatz von Alkoxygruppen durch Alkylsulfanylgruppen am Thiophenring dessen Polymerisationspotential signifikant erniedrigt. Leitfähigkeitsangaben oder Untersuchungen im Hinblick auf den Einsatz des Polymeren in Kondensatoren werden nicht beschrieben.

Um so überraschender ist es, dass nun gefunden wurde, dass Polythiophene enthaltend 3,4-Alkylenoxythiathiophen-Einheiten oder 3,4-Alkylenoxythiathiophen- und 3,4-Alkylendioxythio- phen-Einheiten die vorangehend aufgeführten Nachteile nicht zeigen und sich hervorragend als Feststoffelektrolyte in Elektrolytkondensatoren eignen.

Gegenstand der vorliegenden Erfindung ist daher ein Elektrolytkondensator enthaltend
- eine Schicht eines oxidierbaren Metalls
- eine Oxidschicht dieses Metalls
- einen Feststoffelektrolyten
- Kontakte
dadurch gekennzeichnet, dass er als Feststoffelektrolyt Polythiophene mit wiederkehrenden Einheiten der allgemeinen Formel (I) oder wiederkehrenden Einheiten der allgemeinen Formel (I) und (II), 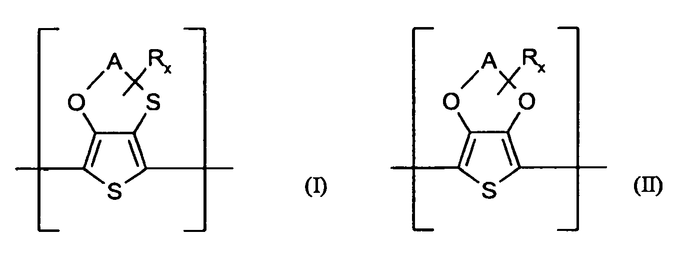 worin
- A: für einen gegebenenfalls substituierten C₁-C₅-Alkylenrest, bevorzugt für einen gegebenenfalls substituierten C₂-C₃-Alkylenrest, steht,
- R: für einen linearen oder verzweigten, gegebenenfalls substituierten C₁-C₁₈-Alkylrest, bevorzugt linearen oder verzweigten, gegebenenfalls substituierten C₁-C₁₄-Alkylrest, einen gegebenenfalls substituierten C₅-C₁₂-Cycloalkylrest, einen gegebenenfalls substituierten C₆-C₁₄-Arylrest, einen gegebenenfalls substituierten C₇-C₁₈-Aralkylrest, einen gegebenenfalls substituierten C₁-C₄-Hydroxyalkylrest, bevorzugt gegebenenfalls substituierten C₁-C₂-Hydroxyalkylrest, oder einen Hydroxylrest steht,
- x: für eine ganze Zahl von 0 bis 8 steht, bevorzugt von 0 bis 6, besonders bevorzugt für 0 oder 1 steht und
für den Fall, dass mehrere Reste R an A gebunden sind, diese gleich oder unterschiedlich sein können,
und gegebenenfalls Gegenionen enthält.

Die allgemeine Formel (I) ist so zu verstehen, dass der Substituent R x-mal an den Alkylenrest A gebunden sein kann.

Die wiederkehrenden Einheiten der allgemeinen Formel (I) sind in den als Feststoffelektrolyt im erfindungsgemäßen Elektrolytkondensator enthaltenen Polythiophenen mit einem Anteil von 1 bis 100 Mol-%, bevorzugt mit einem Anteil von 20 bis 95 Mol-%, besonders bevorzugt mit einem Anteil von 30 bis 80 Mol-% enthalten, und die wiederkehrenden Einheiten der allgemeinen Formel (II) mit einem Anteil von 99 bis 0 Mol-%, bevorzugt mit einem Anteil von 80 bis 5 Mol-%, besonders bevorzugt mit einem Anteil von 70 bis 20 Mol-% enthalten, mit der Maßgabe, dass die Summe beider Anteile 100 Mol-% ergibt.

In einer weiteren bevorzugten Ausführungsform handelt es sich bei den als Feststoffelektrolyt im erfindungsgemäßen Elektrolytkondensator enthaltenen Polythiophenen um die Homopolythiophene aus wiederkehrenden Einheiten der allgemeinen Formel (I), d.h. um solche Polythiophene in denen die wiederkehrenden Einheiten der allgemeinen Formel (I) mit einem Anteil von 100 Mol-% enthalten sind.

Die Verknüpfung der Monomerbausteine gemäß Formel (I) ist sowohl in den Copolymeren als auch in den Homopolymeren so zu verstehen, dass sowohl die regioreguläre Verknüpfung gemäß (I-1), 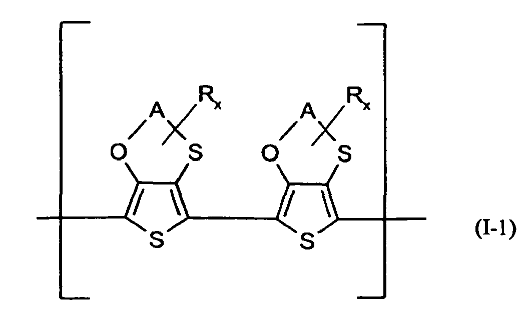 als auch die Verknüpfungen gemäß (I-2) und (I-3) vorkommen können, wobei die Anteile der verschiedenen Verknüpfungen im Polythiophen gleich oder unterschiedlich sein können.

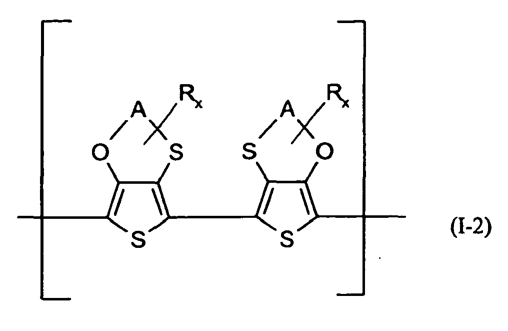

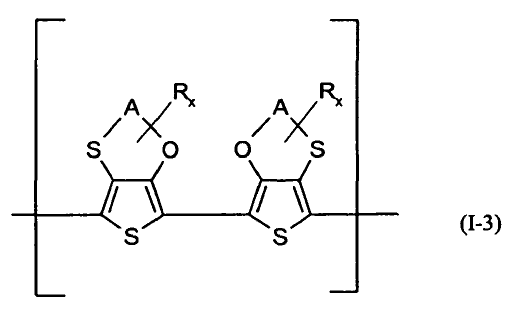

Bevorzugter Gegenstand der vorliegenden Erfindung ist ein Elektrolytkondensator, der als Feststoffelektrolyt Polythiophene mit wiederkehrenden Einheiten der allgemeinen Formel (Ia) oder der allgemeinen Formeln (Ia) und (IIa), 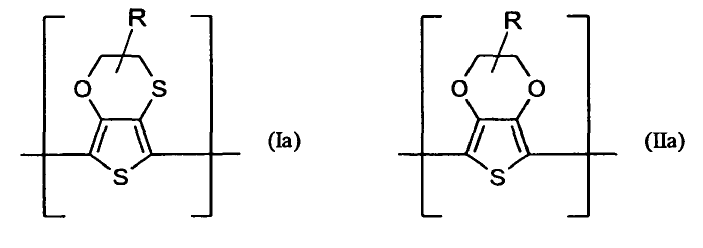 worin
- R: die oben für die allgemeinen Formeln (I) und (II) genannte Bedeutung hat,
enthält.

Besonders bevorzugt ist ein Elektrolytkondensator, der als Feststoffelektrolyt Polythiophene mit wiederkehrenden Einheiten der allgemeinen Formel (Iaa) oder der allgemeinen Formeln (Iaa) und (IIaa) 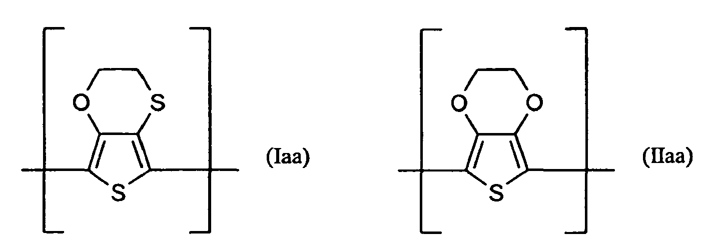 enthält.

Für den Fall, dass es sich bei den Polythiophenen um Copolymere aus zwei oder mehreren Einheiten der allgemeinen Formeln (I) und (II) - hierunter sind hier und im Folgenden auch Einheiten der allgemeinen Formeln (Ia) und (IIa) oder (Iaa) und (IIaa) zu verstehen - oder aus zwei und mehreren unterschiedlichen Einheiten der allgemeinen Formel (I) - hierunter sind hier und im Folgenden auch Einheiten der allgemeinen Formeln (Ia) oder (Iaa) zu verstehen - handelt, können diese statistisch, alternierend oder als Blöcke im Copolymeren enthalten sein, wobei die Verknüpfung der Einheiten der allgemeinen Formel (I) untereinander gemäß (I-1), (I-2) und/oder (I-3) erfolgen kann und die Verknüpfung der Einheiten der allgemeinen Formel (I) zu den Einheiten der allgemeinen Formel (II) gemäß (I-4), (I-5), (I-6) und/oder (I-7) 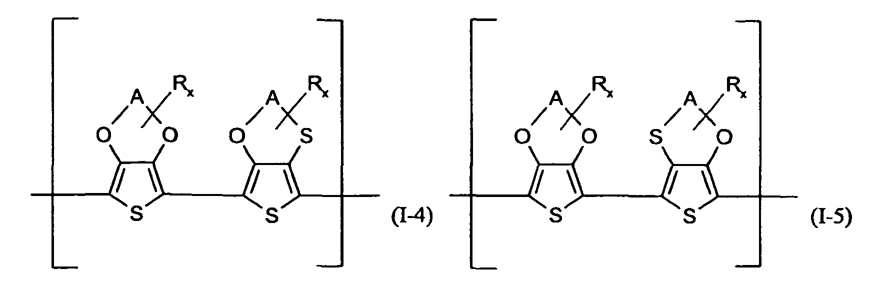 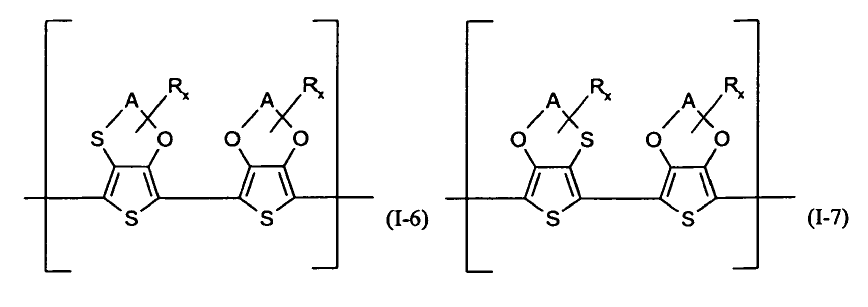 erfolgen kann. Es können sowohl aus den Verknüpfungsmöglichkeiten (I-1) bis (I-3) als auch aus den Verknüpfungsmöglichkeiten (I-4) bis (I-7) eine oder mehrere bevorzugt in den Polythiophenen auftreten, eine solche Bevorzugung muss jedoch nicht auftreten.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten bevorzugt insgesamt n wiederkehrende Einheiten der allgemeinen Formel (I) oder der allgemeinen Formeln (I) und (II), wobei n eine ganze Zahl von 2 bis 2000, bevorzugt 2 bis 100, ist. Die wiederkehrenden Einheiten der allgemeinen Formel (I) und/oder (II) können innerhalb eines Polythiophens jeweils gleich oder verschieden sein. Bevorzugt sind Polythiophene mit jeweils gleichen wiederkehrenden Einheiten der allgemeinen Formel(n) (I) oder (I) und (II).

In bevorzugten Ausführungsformen der vorliegenden Erfmdung sind die Polythiophene Copolymere enthaltend wiederkehrende Einheiten der allgemeinen Formeln (I) und (II), besonders bevorzugt (Ia) und (IIa), ganz besonders bevorzugt (Iaa) und (IIaa).

An den Endgruppen tragen die Polythiophene bevorzugt jeweils H.

Unter wiederkehrenden Einheiten sind im Rahmen der Erfindung Einheiten der allgemeinen Formel (I) bzw. (II), (Ia) bzw. (IIa) und (Iaa) bzw. (IIaa) zu verstehen, unabhängig davon, ob sie einmal oder mehrmals im Polythiophen enthalten sind. D.h. Einheiten der allgemeinen Formel (I) bzw. (II), (Ia) bzw. (IIa) und (Iaa) bzw. (IIaa) sind auch dann als wiederkehrende Einheiten zu verstehen, wenn sie nur einmal im Polythiophen enthalten sind.

C₁-C₅-Alkylenreste A sind im Rahmen der Erfindung Methylen, Ethylen, n-Propylen, n-Butylen oder n-Pentylen. C₁-C₁₈-Alkyl steht im Rahmen der Erfindung für lineare oder verzweigte C₁-C₁₈-Alkylreste wie beispielsweise Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, C₅-C₁₂-Cycloalkyl für C₅-C₁₂-Cycloalkylreste wie beispielsweise Cyclopentyl, Cyclohexyl, Cycloheptyl, Cyclooctyl, Cyclononyl oder Cyclodecyl, C₅-C₁₄-Aryl für C₅-C₁₄-Arylreste wie beispielsweise Phenyl oder Naphthyl, und C₇-C₁₈-Aralkyl für C₇-C₁₈-Aralkylreste wie beispielsweise Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der C₁-C₅-Alkylenreste A kommen zahlreiche organische Gruppen in Frage, beispielsweise Alkyl-, Cycloalkyl-, Aryl-, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Die als Feststoffelektrolyt in den erfindungsgemäßen Elektrolytkondensatoren enthaltenen Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Als Gegenionen kommen monomere oder polymere Anionen, letztere im Folgenden auch als Polyanionen bezeichnet, in Frage.

Polymere Anionen können beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren sein. Diese Polycarbon- und -sulfonsäuren können auch Copolymere von Vinylcarbon- und Vinylsulfonsäwen mit anderen polymerisierbaren Monomeren, wie Acrylsäureestern und Styrol, sein.

Besonders bevorzugt als polymeres Anion ist das Anion der Polystyrolsulfonsäure (PSS) als Gegenion.

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Monomere Anionen sind für den Einsatz in den erfindungsgemäßen Elektrolytkondensatoren bevorzugt.

Als monomere Anionen dienen beispielsweise solche von C₁-C₂₀-Alkansulfonsäuren, wie der Methan-, Ethan-, Propan-, Butan- oder höheren Sulfonsäuren wie der Dodecansulfonsäwe, von aliphatischen Perfluorsulfonsäwen, wie der Trifluormethansulfonsäure, der Perfluorbutansulfonsäure oder der Perfluoroctansulfonsäwe, von aliphatischen C₁-C₂₀-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch C₁-C₂₀₋Alkylgruppen substituierten Sulfonsäuren wie der Benzolsulfonsäwe, o-Toluolsulfonsäure, p-Toluolsulfonsäure oder der Dodecylbenzolsulfonsäure und von Cycloalkansulfonsäwen wie Camphersulfonsäure oder Tetrafluoroborate, Hexafluorophosphate, Perchlorate, Hexafluoroantimonate, Hexafluoroarsenate oder Hexachloroantimonate.

Besonders bevorzugt sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophen/(Poly-)Anion-Komplexe bezeichnet.

Weiterhin bevorzugter Gegenstand der vorliegenden Erfindung ist ein Elektrolytkondensator, dadurch gekennzeichnet, dass es sich bei dem oxidierbaren Metall um ein Ventilmetall oder eine Verbindung mit vergleichbaren Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertreter der Ventilmetalle sind Al, Ta, und Nb. Verbindungen mit vergleichbaren Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit vergleichbaren Eigenschaften sind.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Besonders bevorzugter Gegenstand der vorliegenden Erfindung ist demgemäss ein Elektrolytkondensator, dadurch gekennzeichnet, dass es sich bei dem Ventilmetall oder der Verbindung mit vergleichbaren Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das "oxidierbare Metall" bildet im erfindungsgemäßen Elektrolytkondensator bevorzugt einen Anodenkörper mit großer Oberfläche, z.B. in Form eines porösen Sinterkörpers oder einer aufgerauten Folie. Im Folgenden wird dieser auch kurz als Anodenkörper bezeichnet.

Prinzipiell wird ein solcher erfindungsgemäßer Elektrolytkondensator hergestellt, indem der Anodenkörper zunächst oxidativ, beispielsweise durch elektrochemische Oxidation, mit einem Dielektrikum, d. h. einer Oxidschicht, überzogen wird. Auf dem Dielektrikum wird dann mittels oxidativer Polymerisation chemisch oder elektrochemisch das leitfähige Polymer, erfindungsgemäß ein Polythiophen enthaltend wiederkehrende Einheiten der allgemeinen Formel(n) (I) oder (I) und (II), abgeschieden, welches den Feststoffelektrolyten bildet. Ein Überzug mit weiteren gut leitfähigen Schichten, wie Graphit und Silber, dient der Ableitung des Stroms. Schließlich wird der Kondensatorkörper kontaktiert und eingekapselt.

Die Polythiophene werden auf den mit einer Oxidschicht bedeckten Anodenkörper durch oxidative Polymerisation von Thiophenen der allgemeinen Formel (III) oder einer Mischung aus Thiophenen der allgemeinen Formeln (III) und (IV), 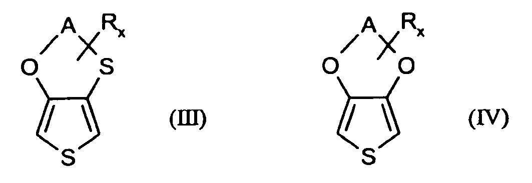 worin
- A, R und x: die oben für die allgemeinen Formeln (I) und (II) genannte Bedeutung haben,
erzeugt, indem man auf die Oxidschicht des Anodenkörpers die Thiophene der allgemeinen Formel(n) (III) oder (III) und (IV), Oxidationsmittel und gegebenenfalls Gegenionen, vorzugsweise in Form von Lösungen, entweder getrennt nacheinander oder zusammen aufbringt und die oxidative Polymerisation, je nach Aktivität des verwendeten Oxidationsmittiels, gegebenenfalls durch ein Erwärmen der Beschichtung zu Ende führt.

Weiterhin Gegenstand der vorliegenden Erfindung ist somit ein Verfahren zur Herstellung eines erfindungsgemäßen Elektrolytkondensators, wonach Thiophene der allgemeinen Formel (III) oder eine Mischung aus Thiophenen der allgemeinen Formeln (III) und (IV), 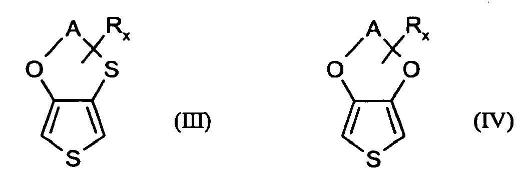 worin
- A, R und x: die oben für die allgemeinen Formeln (I) und (II) genannte Bedeutung haben,
ein Oxidationsmittel und gegebenenfalls Gegenionen, zusammen oder nacheinander gegebenenfalls in Form von Lösungen, auf eine Oxidschicht eines Metalls aufgebracht und chemisch oxidativ zu den Polythiophenen mit wiederkehrenden Einheiten der allgemeinen Formel (I) oder wiederkehrenden Einheiten der allgemeinen Formeln (I) und (II); 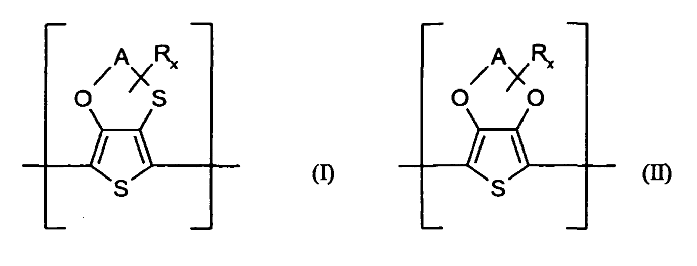 worin
- A, R und x: die oben genannte Bedeutung haben
bei Temperaturen von -10°C bis 250°C, bevorzugt bei Temperaturen von 0°C bis 200°C polymerisiert werden oder
dass Thiophene der allgemeinen Formel (III) oder eine Mischung aus Thiophenen der allgemeinen Formeln (III) und (IV) und Gegenionen gegebenenfalls aus Lösung durch elektrochemische Polymerisation zu den Polythiophenen mit wiederkehrenden Einheiten der allgemeinen Formel (I) oder wiederkehrenden Einheiten der allgemeinen Formeln (I) und (II) bei Temperaturen von -78°C bis 250°C, bevorzugt von -20°C bis 60°C auf die Oxidschicht eines Metalls aufgebracht werden.

Die Aufbringung kann direkt oder unter Verwendung eines Haftvermittlers, beispielsweise eines Silans, und/oder einer anderen funktionellen Schicht auf die Oxidschicht des Anodenkörpers erfolgen.

In bevorzugten Ausführungsformen des erfindungsgemäßen Verfahrens werden als Thiophene der allgemeinen Formel (III) oder einem Gemisch aus Thiophenen der allgemeinen Formeln (III) und (IV) Thiophene der allgemeinen Formel (IIIa) oder eine Mischung aus Thiophenen der allgemeinen Formeln (IIIa) und (IVa), 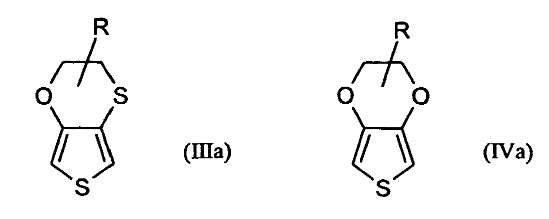 worin
- R: die oben für die allgemeinen Formeln (I) und (II) genannte Bedeutung hat,
besonders bevorzugt Thiophene der allgemeinen Formel (IIIaa) oder eine Mischung aus Thiophenen der allgemeinen Formeln (IIIaa) und (IVaa), 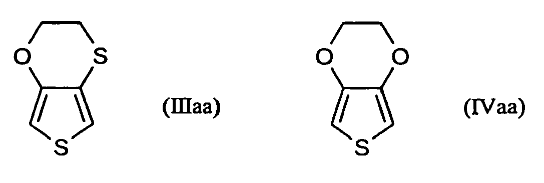 eingesetzt.

Die oxidative chemische Polymerisation der Thiophene der Formel(n) (III) oder (III) und (IV) wird je nach verwendetem Oxidatiönsmittel und gewünschter Reaktionszeit im allgemeinen bei Temperaturen von -10°C bis 250°C, bevorzugt bei Temperaturen von 0°C bis 200°C, vorgenommen.

Für den Fall, dass Mischungen aus Thiophenen der allgemeinen Formeln (III) und (IV) nach dem erfindungsgemäßen Verfahren polymerisiert werden, kann das Molverhältnis der Thiophene der allgemeinen Formeln (III) und (IV) in den Mischungen beliebig sein. Das Molverhältnis der wiederkehrenden Einheiten (I) und (II) im resultierenden Polythiophen kann diesem Mischungsverhältnis der Thiophene der allgemeinen Formeln (III) und (IV) in den zu polymerisierenden Mischungen entsprechen oder kann sich von diesem unterscheiden.

Die für die Herstellung der erfindungsgemäß zu verwendenden Polythiophene erforderlichen 3,4-Alkylenoxythiathiophene der Formel (III) oder (IV) sind dem Fachmann bekannt oder nach bekannten Verfahren herstellbar (beispielsweise gemäß P. Blanchard, A. Cappon, E. Levillain, Y. Nicolas, P. Frere und J. Roncali, Org. Lett. 4 (4), 2002, S. 607 - 609).

Als Lösungsmittel für die Thiophene der allgemeinen Formel (III) oder (IV) und/oder Oxidationsmittel und/oder Gegenionen seien vor allem folgende unter den Reaktionsbedingungen inerten organischen Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Lösungsmittel verwendet werden.

Als Oxidationsmittel können alle dem Fachmann bekannten für die oxidative Polymerisation von Thiophenen, Anilinen oder Pyrrolen geeignete Metallsalze verwendet werden.

Geeignete Metallsalze sind Metallsalze von Haupt- oder Nebengruppenmetallen, letztere im Folgenden auch als Übergangsmetallsalze bezeichnet, des Periodensystems der Elemente. Geeignete Übergangsmetallsalze sind insbesondere Salze einer anorganischen oder organischen Säure oder organische Reste aufweisenden anorganischen Säure von Übergangsmetallen, wie z.B. von Eisen(III), Kupfer(II), Chrom(VI), Cer(IV), Mangan(IV), Mangan(VII) und Ruthenium(III).

Bevorzugte Übergangsmetallsalze sind solche des Eisen(III). Eisen(III)-Salze sind häufig preiswert, leicht erhältlich und können leicht gehandhabt werden, z.B. die Eisen(III)-Salze anorganischer Säuren, beispielsweise Eisen(III)halogenide (z.B. FeCl₃) oder Eisen(III)-Salze anderer anorganischer Säuren, wie Fe(ClO₄)₃ oder Fe₂(SO₄)₃, und die Eisen(III)-Salze organischer Säuren und organische Reste aufweisender anorganischer Säuren.

Als Eisen(III)-Salze organische Reste aufweisende anorganische Säuren seien beispielsweise die Eisen(III)-Salze der Schwefelsäuremonoester von C₁-C₂₀-Alkanolen, z.B. das Eisen(III)-Salz des Laurylsulfates genannt.

Besonders bevorzugte Übergangsmetallsalze sind solche einer organischen Säure, insbesondere Eisen(III)-Salze organischer Säuren.

Als Eisen(III)-Salze organischer Säuren seien beispielsweise genannt: die Eisen(III)-Salze von C₁-C₂₀-Alkansulfonsäuren, wie der Methan-, Ethan-, Propan-, Butan- oder höherer Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen C₁-C₂₀-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch C₁-C₂₀-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure.

Es können auch beliebige Gemische dieser vorgenannten Eisen(III)-Salze organischer Säuren eingesetzt werden.

Die Verwendung der Eisen(III)-salze organischer Säuren und der organischen Reste aufweisenden anorganischen Säuren hat den großen Vorteil, dass sie nicht korrosiv wirken.

Ganz besonders bevorzugt als Metallsalze sind Eisen(III)-p-toluolsulfonat, Eisen(III)-o-toluolsulfonat oder einer Mischung aus Eisen(III)-p-toluolsulfonat und Eisen(III)-o-toluolsulfonat.

In bevorzugten Ausführungsformen sind die Metallsalze vor ihrem Einsatz mit einem Ionenaustauscher, vorzugsweise einem basischen Anionenaustauscher, behandelt worden. Beispiele für geeignete Ionenaustauscher sind mit tertiären Aminen funktionalisierte makroporöse Polymerisate aus Styrol und Divinylbenzol wie sie z.B. unter dem Handelsnamen Lewatit^{®} von der Bayer AG, Leverkusen vertrieben werden.

Weiterhin geeignete Oxidationsmittel sind Peroxoverbindungen wie Peroxodisulfate (Persulfate), insbesondere Ammonium- und Alkaliperoxodisulfate, wie Natrium- und Kaliumperoxodisulfat, oder Alkaliperborate - gegebenenfalls in Anwesenheit katalytischer Mengen an Metallionen, wie Eisen-, Cobalt-, Nickel-, Molybdän- oder Vanadiumionen - sowie Übergangsmetalloxide, wie z.B. Braunstein (Mangan(IV)oxid) oder Cer(IV)oxid.

Für die oxidative Polymerisation der Thiophene der Formel (III) oder (IV) werden theoretisch je Mol Thiophen 2,25 Äquivalente Oxidationsmittel benötigt (siehe z.B. J. Polym. Sc. Part A Polymer Chemistry Vol. 26, S. 1287 (1988)). Es können aber auch niedrigere oder höhere Äquivalente an Oxidationsmittel eingesetzt werden. Im Rahmen der Erfindung wird je Mol Thiophen bevorzugt ein Äquivalent oder mehr, besonders bevorzugt 2 Äquivalente oder mehr Oxidationsmittel eingesetzt.

Die Formulierung Thiophene der allgemeinen Formel (III) oder Mischungen aus Thiophenen der allgemeinen Formeln (III) und (IV) wird im Folgenden auch verkürzt aber gleichbedeutend als Thiophene der allgemeinen Formel(n) (III) oder (III) und (IV) geschrieben.

Als Gegenionen kommen die vorangehend bereits genannten polymeren oder monomeren Anionen in Frage.

Bei getrennter Aufbringung von Thiophenen der allgemeinen Formel(n) (III) oder (III) und (IV), Oxidationsmitteln und gegebenenfalls Gegenionen wird die Oxidschicht des Anodenkörpers vorzugsweise zunächst mit der Lösung des Oxidationsmittels und gegebenenfalls der Gegenionen und anschließend mit der Lösung der Thiophene der allgemeinen Formel(n) (III) oder (III) und (IV) beschichtet. Bei der bevorzugten gemeinsamen Aufbringung von Thiophenen, Oxidationsmittel und gegebenenfalls Gegenionen wird die Oxidschicht des Anodenkörpers nur mit einer, nämlich einer Thiophene, Oxidationsmittel und gegebenenfalls Gegenionen enthaltenden Lösung beschichtet.

Den Lösungen können außerdem weitere Komponenten wie ein oder mehrere in organischen Lösungsmitteln lösliche organische Binder wie Polyvinylacetat, Polycarbonat, Polyvinylbutyral, Polyacrylsäureester, Polymethacrylsäureester, Polystyrol, Polyacrylnitril, Polyvinylchlorid, Polybutadien, Polyisopren, Polyether, Polyester, Silicone, Styrol/Acrylsäureester-, Vinylacetat/Acrylsäureester- und Ethylen/Vinylacetat-Copolymerisate oder wasserlösliche Binder wie Polyvinylalkohole, Vernetzer wie Polyurethane bzw. Polyurethandispersionen, Polyacrylate, Polyolefindispersionen, Epoxysilane, wie 3-Glycidoxypropyltrialkoxysilan, und/oder Additive wie z.B. oberflächenaktive Stoffe zugesetzt werden. Weiterhin können Alkoxysilanhydrolysate, z.B. auf Basis von Tetraethoxysilan, zur Erhöhung der Kratzfestigkeit bei Beschichtungen zugesetzt werden.

Die auf die Oxidschicht des Anodenkörpers aufzubringenden Lösungen enthalten vorzugsweise 1 bis 30 Gew.% des Thiophens der allgemeinen Formel (III) oder der Mischung aus Thiophenen der allgemeinen Formeln (III) und (IV) und 0 bis 50 Gew.-% Bindemittel, Vernetzer und/oder Additive, beide Gewichtsprozente bezogen auf das Gesamtgewicht der Mischung.

Die Lösungen werden nach bekannten Verfahren, z.B. durch Tränkung, Gießen, Auftropfen, Spritzen, Aufsprühen, Aufrakeln, Bestreichen oder Bedrucken auf die Oxidschicht des Anodenkörpers aufgebracht.

Das Entfernen der Lösungsmittel nach dem Aufbringen der Lösungen kann durch einfaches Verdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Polymers typischerweise 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten Anodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Nach dem Entfernen der Lösungsmittel (Trocknen) und gegebenenfalls nach der thermischen Nachbehandlung kann es vorteilhaft sein, das überschüssige Oxidationsmittel und Restsalze aus der Beschichtung mit einem geeigneten Lösungsmittel, bevorzugt Wasser oder Alkoholen, auszuwaschen. Unter Restsalzen sind hier die Salze der reduzierten Form des Oxidationsmittels und gegebenenfalls weitere vorhandene Salze zu verstehen.

Je nach Art des Anodenkörpers kann es vorteilhaft sein, den Anodenkörper bevorzugt nach einer Waschung weitere Male mit den Mischungen zu imprägnieren, um dickere Polymerschichten zu erzielen.

Nach der Polymerisation und bevorzugt während oder nach der Waschung kann es vorteilhaft sein, den Oxidfilm elektrochemisch nachzubilden, um eventuelle Fehlstellen im Oxidfilm auszubessern und dadurch den Reststrom des fertigen Kondensators zu senken (Reformierung). Der Begriff "Reformierung" ist dem Fachmann bekannt.

Die Polythiophene können aus den Thiophenen der allgemeinen Formel (III) oder Mischungen aus Thiophenen der allgemeinen Formeln (III) und (IV) auch durch elektrochemische oxidative Polymerisation hergestellt werden.

Die elektrochemische oxidative Polymerisation der Thiophene der allgemeinen Formel (III) oder der Mischung aus Thiophenen der allgemeinen Formeln (III) und (IV) kann bei Temperaturen von -78°C bis zum Siedepunkt des eingesetzten Lösungsmittels vorgenommen werden. Bevorzugt wird bei Temperaturen von -78°C bis 250°C, besonders bevorzugt von -20°C bis 60°C elektrochemisch polymerisiert.

Die Reaktionszeiten betragen in Abhängigkeit vom verwendeten Thiophen oder Thiophengemisch, dem verwendeten Elektrolyten, der gewählten Temperatur und der angewendeten Stromdichte bevorzugt 1 Minute bis 24 Stunden.

Sofern die Thiophene der allgemeinen Formel (III) oder die Mischung aus Thiophenen der allgemeinen Formeln (III) und (IV) flüssig sind, kann die Elektropolymerisation in An- oder Abwesenheit von unter den Bedingungen der Elektropolymerisation inerten Lösungsmitteln vorgenommen werden; die Elektropolymerisation von festen Thiophenen der allgemeinen Formel (III) oder Mischungen aus Thiophenen der allgemeinen Formeln (III) und (IV) wird in Gegenwart von unter den Bedingungen der elektrochemischen Polymerisation inerten Lösungsmitteln durchgeführt. In bestimmten Fällen kann es vorteilhaft sein, Lösungsmittelgemische einzusetzen und/oder den Lösungsmitteln Lösungsvermittler (Detergentien) zuzusetzen.

Als unter den Bedingungen der Elektropolymerisation inerte Lösungsmittel seien beispielsweise genannt: Wasser; Alkohole wie Methanol und Ethanol; Ketone wie Acetophenon; halogenierte Kohlenwasserstoffe wie Methylenchlorid, Chloroform, Tetrachlorkohlenstoff und Fluorkohlenwasserstoffe; Ester wie Ethylacetat und Butylacetat; Kohlensäureester wie Propylencarbonat; aromatische Kohlenwasserstoffe wie Benzol, Toluol, Xylol; aliphatische Kohlenwasserstoffe wie Pentan, Hexan, Heptan und Cyclohexan; Nitrile wie Acetonitril und Benzonitril; Sulfoxide wie Dimethylsulfoxid; Sulfone wie Dimethylsulfon, Phenylmethylsulfon und Sulfolan; flüssige aliphatische Amide wie Methylacetamid, Dimethylacetamid, Dimethylformamid, Pyrrolidon, N-Methylpyrrolidon, N-Methylcaprolactam; aliphatische und gemischt aliphatisch-aromatische Ether wie Diethylether und Anisol; flüssige Harnstoffe wie Tetramethylharnstoff oder N,N-Dimethyl-imidazolidinon.

Für die Elektropolymerisation werden die Thiophene der allgemeinen Formel (III) oder die Mischung aus Thiophenen der allgemeinen Formeln (III) und (IV) bzw. deren Lösungen mit Elektrolytzusätzen versetzt. Als Elektrolytzusätze werden vorzugsweise freie Säuren oder übliche Leitsalze verwendet, die eine gewisse Löslichkeit in den verwendeten Lösungsmitteln aufweisen. Als Elektrolytzusätze haben sich z.B. bewährt: freie Säuren wie p-Toluolsulfonsäure, Methansulfonsäure, ferner Salze mit Alkansulfonat-, aromatischen Sulfonat-, Tetrafluoroborat-, Hexafluorophosphat-, Perchlorat-, Hexafluoroantimonat-, Hexafluoroarsenat- und Hexachloroantimonat-Anionen und Alkali-, Erdalkali- oder gegebenenfalls alkylierten Ammonium-, Phosphonium-, Sulfonium- und Oxonium-Kationen.

Die Konzentrationen der monomeren Thiophene der allgemeinen Formel(n) (III) oder (III) und (IV) können zwischen 0,01 und 100 Gew.-% (100 Gew.-% nur bei flüssigem Thiophen) liegen; bevorzugt betragen die Konzentrationen 0,1 bis 20 Gew.-%.

Die Elektropolymerisation kann diskontinuierlich oder kontinuierlich durchgeführt werden.

Die Stromdichten für die Elektropolymerisation können in weiten Grenzen schwanken; üblicherweise wird mit Stromdichten von 0,0001 bis 100 mA/cm², vorzugsweise 0,01 bis 40 mA/cm² gearbeitet. Bei diesen Stromdichten stellen sich Spannungen von etwa 0,1 bis 50 V ein.

Nach der elektrochemischen Polymerisation kann es vorteilhaft sein, den Oxidfilm elektrochemisch nachzubilden, um eventuelle Fehlstellen im Oxidfilm auszubessern und dadurch den Reststrom des fertigen Kondensators zu senken (Reformierung).

Als Gegenionen eignen sich die oben bereits aufgeführten monomeren oder polymeren Anionen, bevorzugt diejenigen der monomeren oder polymeren Alkan- oder Cycloalkansulfonsäuren oder aromatischen Sulfonsäuren. Besonders bevorzugt zur Anwendung in den erfindungsgemäßen Elektrolytkondensatoren sind die Anionen der monomeren Alkan- oder Cycloalkansulfonsäuren oder aromatischen Sulfonsäuren, da diese enthaltende Lösungen besser geeignet sind, in das poröse Anodenmaterial einzudringen, und somit eine größere Kontaktfläche zwischen diesem und dem Feststoffelektrolyten gebildet werden kann. Die Gegenionen werden den Lösungen beispielsweise in Form ihrer Alkalisalze oder als freie Säuren zugegeben. Bei der elektrochemischen Polymerisation werden diese Gegenionen der Lösung oder den Thiophenen gegebenenfalls als Elektrolytzusätze oder Leitsalze zugegeben.

Außerdem können als Gegenionen die gegebenenfalls vorhandenen Anionen des verwendeten Oxidationsmittels dienen, so dass im Falle der chemischen oxidativen Polymerisation eine Zugabe zusätzlicher Gegenionen nicht zwingend erforderlich ist.

Weiterhin Gegenstand der vorliegenden Erfindung ist die Verwendung von Polythiophenen mit wiederkehrenden Einheiten der allgemeinen Formel (I) oder wiederkehrenden Einheiten der allgemeinen Formeln (I) und (II), 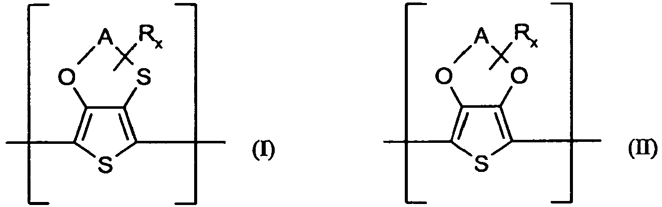 worin
- A, R und x: die oben genannte Bedeutung haben
als Feststoffelektrolyte in Elektrolyt-Kondensatoren, bevorzugt in solchen, die als oxidierbares Metall ein Ventilmetall oder eine Verbindung mit vergleichbaren Eigenschaften enthalten, welche besonders bevorzugt Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen sind.

Die erfindungsgemäße Verwendung der Polythiophene mit wiederkehrenden Einheiten der allgemeinen Formel (I) als Feststoffelektrolyte in Elektrolytkondensatoren bietet gegenüber bekannten Feststoffelektrolyten wie Poly(3,4-Ethylendioxythiophen) den Vorteil, dass der Reststrom der Kondensatoren deutlich reduziert und der äquivalente Serienwiderstand erniedrigt ist. Aus dem niedrigeren äquivalenten Serienwiderstand resultiert ein besseres Hochfrequenzverhalten des Kondensators.

Die Polythiophene mit wiederkehrenden Einheiten der allgemeinen Formel (I) oder wiederkehrenden Einheiten der allgemeinen Formeln (I) und (II) eignen sich weiterhin zur Herstellung leitfähiger Schichten für andere Anwendungen wie beispielsweise zur Herstellung von Antistatik-Beschichtungen, Lochinjektionsschichten für OLED's (Organische Licht emittierende Dioden), leitfähigen Schichten für OFET's (Organische Feldeffekt-Transistoren), Elektroden für Kondensatoren, Elektrolytkondensatoren, Doppelschichtkondensatoren, elektrochemischen Kondensatoren, Batterien, Brennstoffzellen, Solarzellen, Sensoren und als Aktuatoren.

Weiterhin beschrieben werden elektrisch leitfähige Schichten, die Polythiophene mit wiederkehrenden Einheiten der allgemeinen Formel (I) oder wiederkehrenden Einheiten der allgemeinen Formeln (I) und (II), 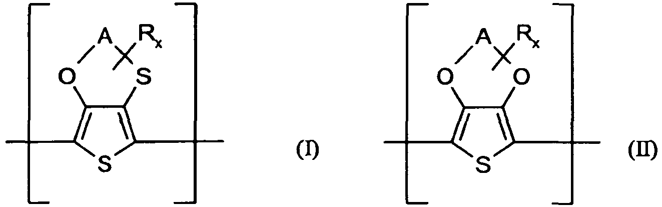 worin
- A, R und x: die oben genannte Bedeutung haben,
und monomere Anionen, ausgenommen Hexafluorophoshat, oder polymere Anionen als Gegenionen enthalten.

Die Polythiophenschichten besitzen je nach Anwendung eine Dicke von 1 nm bis 100 µm, bevorzugt 10 nm bis 10 µm, besonders bevorzugt 50 nm bis 1 µm.

Die leitfähigen Schichten sind auf einfache Weise durch oxidative Polymerisation herstellbar.

Beschrieben wird ein Verfahren zur Herstellung elektrisch leitfähiger Schichten, dadurch gekennzeichnet, dass Thiophene der allgemeinen Formel (III) oder eine Mischung aus Thiophenen der allgemeinen Formeln (III) und (IV), 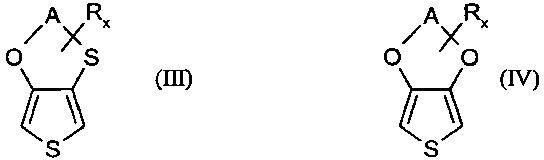 worin
- A, R und x: die oben für die allgemeinen Formeln (I) und (II) genannte Bedeutung haben,
ein Oxidationsmittel und gegebenenfalls Gegenionen, zusammen oder nacheinander gegebenenfalls in Form von Lösungen, auf eine Unterlage aufgebracht und chemisch oxidativ zu den Polythiophenen mit wiederkehrenden Einheiten der allgemeinen Formel (I) oder wiederkehrenden Einheiten der allgemeinen Formeln (I) und (II), 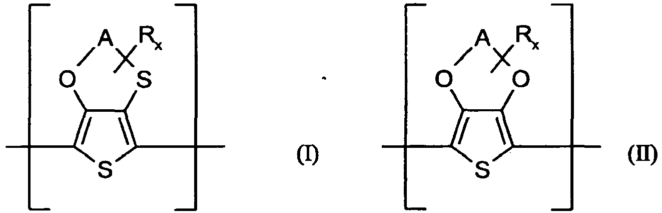 worin
- A, R und x: die oben genannte Bedeutung haben
bei Temperaturen von -10°C bis 250°C, bevorzugt bei Temperaturen von 0°C bis 200°C polymerisiert werden.

Die leitfähigen Schichten können auch elektrochemisch oxidativ hergestellt werden, indem Thiophene der allgemeinen Formel (III) oder eine Mischung aus Thiophenen der allgemeinen Formeln (III) und (IV) und Gegenionen gegebenenfalls aus Lösung durch elektrochemische Polymerisation zu den Polythiophenen mit wiederkehrenden Einheiten der allgemeinen Formel (I) oder wiederkehrenden Einheiten der allgemeinen Formeln (I) und (II) bei Temperaturen von -78°C bis 250°C, bevorzugt von -20°C bis 60°C auf eine Unterlage aufgebracht werden.

Beispielhafte und bevorzugte Reaktionsbedingungen, Molverhältnisse, Gewichtsprozentangaben, Lösungsmittel, Oxidationsmittel und Leitsalze sowie im Zusammenhang mit diesen beschriebene Varianten bzw. Besonderheiten bei der Durchführung der chemischen oder elektrochemischen oxidativen Polymerisation und gegebenenfalls vorteilhaften Nachbehandlungen entsprechen dem vorangehend für die Herstellung der Polythiophene als Feststoffelektrolyte in den erfindungsgemäßen Elektrolytkondensatoren bereits beschriebenen.

Unter polymeren Anionen sind die vorangehend bereits für die erfindungsgemäßen Polythiophene genannten zu verstehen, unter monomeren Anionen sind die vorangehend bereits für die erfindungsgemäßen Elektrolytkondensatoren genannten - ausgenommen Hexafluorophosphat - zu verstehen. Bevorzugt sind die monomeren Anionen organischer Carbon- oder Sulfonsäuren, wie beispielsweise solche von C₁-C₂₀-Alkansulfonsäuren, von aliphatischen Perfluorsulfonsäuren, von aliphatischen C₁-C₂₀-Carbonsäuren, von aliphatischen Perfluorcarbonsäuren, von aromatischen, gegebenenfalls durch C₁-C₂₀-Alkylgruppen substituierten Sulfonsäuren und von Cycloalkansulfonsäuren, zu verstehen. Die polymeren Anionen sind als Gegenionen für die erfindungsgemäßen leitfähigen Schichten bevorzugt, da sie bei der Bildung von Polymerfilmen zu verbesserten Filmbildungseigenschaften führen können.

Bei der Unterlage kann es sich beispielsweise um Glas, Dünnstglas (flexibles Glas) oder Kunststoffe handeln, die im Falle der elektrochemischen Polymerisation mit einer leitfähigen Schicht (Elektrode) versehen sind.

Besonders geeignete Kunststoffe sind: Polycarbonate, Polyester wie z.B. PET und PEN (Polyethylenterephthalat bzw. Polyethylennaphthalat), Copolycarbonate, Polysulfon, Polyethersulfon (PES), Polyimid, Polyethylen, Polypropylen oder cyclische Polyolefine bzw. cyclische Olefincopolymere (COC), hydrierte Styrolpolymere oder hydrierte Styrolcopolymere.

Geeignete Polymerunterlagen können beispielsweise Folien wie Polyesterfolien, PES-Folien der Firma Sumitomo oder Polycarbonatfolien der Firma Bayer AG (Makrofol^{®} sein.

Die wie beschrieben hergestellten leitfähigen Schichten können auf der Unterlage verbleiben oder von dieser abgelöst werden.

Die leitfähigen Schichten besitzen den Vorteil, dass ihre Leitfähigkeit durch die Wahl der Monomer-Zusammensetzung einstellbar ist.

Die spezifische Leitfähigkeit der Schichten kann je nach Anwendung unterschiedlich sein. Beispielsweise sind für hochohmige Anwendungen wie antistatische Beschichtungen Oberflächenwiderstände von 10⁵ bis 10¹⁰ Ohm/sq und für OLED's spezifische Leitfähigkeiten von 10⁻² S/cm bis 10⁻⁶ S/cm bevorzugt. Für andere Anwendungen wie beispielsweise Kondensatoren sind im Rahmen der Erfindung Schichten mit einer spezifischen Leitfähigkeit von mindestens 1 S/cm, bevorzugt mindestens 10 S/cm, besonders bevorzugt mindestens 100 S/cm bevorzugt.

Die leitfähigen Schichten können vorteilhafterweise transparent sein.

Neben der vorangehend beschriebenen Herstellung der leitfähigen Schichten durch in-situ-Polymerisation auf der gewünschten Unterlage können die Schichten auch aus fertigen Polythiophendispersionen hergestellt werden. Eine solche Applikation aus Lösung kann für die vorangehend aufgeführten Verwendungen vorteilhaft sein, da gegebenenfalls aufwendige Prozessschritte bei der Herstellung der Endprodukte, wie OLED's, OFET's, Kondensatoren, Batterien, Brennstoffzellen, Solarzellen, Sensoren und Aktuatoren, eingespart werden können. Hierzu können Dispersionen enthaltend Polythiophene in kationischer Form hergestellt werden.

Weiterhin erhältlich sind daher Dispersionen enthaltend kationische Polythiophene mit wiederkehrenden Einheiten der allgemeinen Formel (I) oder wiederkehrenden Einheiten der allgemeinen Formeln (I) und (II), 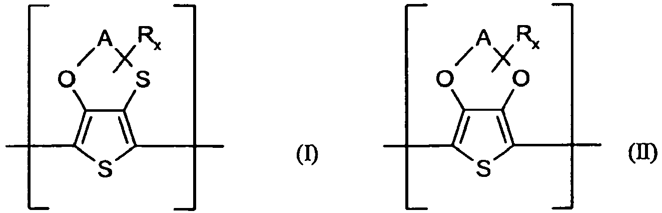 worin
- A, R und x: die oben genannte Bedeutung haben,
polymere Anionen als Gegenionen und ein oder mehrere Lösungsmittel.

Als Lösungsmittel kommen die vorangehend bereits für die Herstellung der als Feststoffelektrolyte in den erfindungsgemäßen Elektrolytkondensatoren eingesetzten Polythiophene genannten in Frage. Bevorzugte Lösungsmittel sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Als polymere Anionen kommen die bereits vorangehend aufgeführten in Frage. Bevorzugte polymere Anionen sind die der Polystyrolsulfonsäure.

Die Dispersionen können direkt durch Herstellung der Polythiophene in Gegenwart mindestens eines Lösungsmittels erhalten werden.

Daher ist weiterhin beschrieben wird ein Verfahren zur Herstellung der erfindungsgemäßen Dispersionen, wonach Thiophene der allgemeinen Formel (III) oder einer Mischung aus Thiophenen der allgemeinen Formeln (III) und (IV), 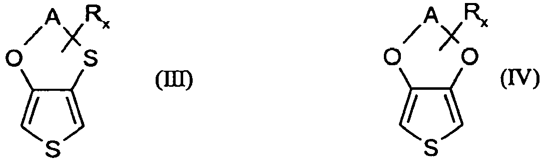 worin
- A, R und x: die oben genannte Bedeutung haben,
in Gegenwart eines oder mehrerer Oxidationsmittel, eines oder mehrerer Lösungsmittel und polymerer Anionen oder der korrespondierenden polymeren Säuren oxidativ polymerisiert werden.

Die Herstellung der Dispersionen erfolgt aus Thiophenen der allgemeinen Formel (III) oder einer Mischung aus Thiophenen der allgemeinen Formeln (III) und (IV) analog zu den in EP-A 440 957 genannten Bedingungen.

Als Oxidationsmittel, Lösungsmittel und Anionen kommen die vorangehend bereits aufgeführten in Frage.

Die Anionen oder deren korrespondierenden Säuren werden bevorzugt in einer solchen Menge eingesetzt, dass auf 1 Mol Thiophen der allgemeinen Formel(n) (III) oder (III) und (IV) 0,25 bis 20, besonders bevorzugt 0,25 bis 10, ganz besonders bevorzugt 0,8 bis 8 anionische Gruppen oder Säuregruppen entfallen.

Die Thiophene der allgemeinen Formel(n) (III) oder (III) und (IV) und die Anionen oder deren korrespondierenden Säuren werden bevorzugt in einer solchen Menge Lösungsmittel gelöst, dass stabile Dispersionen erhalten werden, die einen Feststoffgehalt von 0,5 bis 55 Gew.-%, vorzugsweise 1 bis 30 Gew.-%, bezogen auf das Gesamtgewicht der Dispersion, besitzen.

Weitere geeignete Oxidationsmittel zur Herstellung der Dispersionen sind Sauerstoff oder Luft alleine oder gegebenenfalls in Kombination mit einem der vorangehend beschriebenen Oxidationsmittel. Bei Verwendung von Luft oder Sauerstoff als Oxidationsmittel wird in die Thiophene, Anionen oder deren korrespondierende Säure enthaltende Lösung solange Luft oder Sauerstoff eingeleitet, bis die Polymerisation abgeschlossen ist. Gegebenenfalls können zusätzlich katalytische Mengen an Metallionen, wie Eisen-, Cobalt-, Nickel-, Molybdän- oder Vanadiumionen, in den Polymerisationslösungen enthalten sein.

Die Dispersionen können aber auch aus den Polythiophenen mit wiederkehrenden Einheiten der allgemeinen Formel (I) oder wiederkehrenden Einheiten der allgemeinen Formeln (I) und (II), durch nachträgliche Zugabe von einem oder mehreren Lösungsmittel hergestellt werden.

Weiterhin beschrieben werden Polythiophene, dadurch gekennzeichnet, dass sie wiederkehrende Einheiten der allgemeinen Formeln (I) und (II) enthalten, 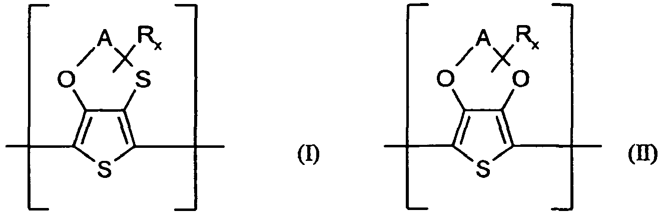 worin
- A, R und x: die oben genannte Bedeutung haben,
für den Fall, dass mehrere Reste R an A gebunden sind, diese gleich oder unterschiedlich sein können,
wobei wiederkehrende Einheiten der allgemeinen Formel (I) mit einem Anteil von 1 bis 100 Mol-%, bevorzugt mit einem Anteil von 20 bis 95 Mol-%, besonders bevorzugt mit einem Anteil von 30 bis 80 Mol-%, und wiederkehrende Einheiten der allgemeinen Formel (II) mit einem Anteil von 99 bis 0 Mol-%, bevorzugt mit einem Anteil von 80 bis 5 Mol-%, besonders bevorzugt mit einem Anteil von 70 bis 20 Mol-% enthalten sind, mit der Maßgabe, dass die Summe beider Anteile 100 Mol-% ergibt,
und dass die Polythiophene für den Fall, dass sie kationisch sind, polymere Anionen als Gegenionen enthalten.

Als Vorzugsbereiche für die Polythiophene gelten in beliebiger Kombination diejenigen, die oben bereits für die Polythiophene als Feststoffelektrolyte in den erfindungsgemäßen Elektrolytkondensatoren beschrieben wurden. Als monomere Anionen organischer Carbon- oder Sulfonsäuren oder polymere Anionen kommen die vorangehend bereits erwähnten in Frage.

Die Polythiophene können oxidativ chemisch oder elektrochemisch wie vorangehend beschrieben hergestellt werden. Sie können, in situ hergestellt oder in Form der erfindungsgemäßen Dispersionen, beispielsweise zur Herstellung von Antistatik-Beschichtungen, Lochinjektionsschichten für OLED's (Organische Licht emittierende Dioden), leitfähigen Schichten für OFET's (Organische Feldeffekt-Transistoren), Feststoffelektrolyten in Elektrolytkondensatoren oder Elektroden für Kondensatoren, Elektrolytkondensatoren, Doppelschichtkondensatoren, elektrochemischen Kondensatoren, Batterien, Brennstoffzellen, Solarzellen, Sensoren und Aktuatoren verwendet werden.

Ihr besonderer Vorteil liegt darin, dass durch die Wahl der Monomer-Zusammensetzung die Leitfähigkeit der resultierenden Schichten einstellbar ist. Hierdurch können insbesondere für höherohmige Einstellungen die ansonsten erforderlichen, mit anderweitigen Nachteilen verbundenen Maßnahmen entfallen, wie z. B. die zusätzliche Einbringung von PSS oder anderer nicht intrinsisch leitfähiger und somit leitfähigkeitsverringernder Additive bzw. die aufwendige Fein- und Feinstdispergierung, die durch eine Vergrößerung der für den elektrischen Widerstand relevanten Partikelgrenzflächen für eine Leitfähigkeitsverringerung sorgt.

Ebenfalls Gegenstand der vorliegenden Erfindung ist die Verwendung der erfindungsgemäßen Polythiophene oder Dispersionen zur Herstellung leitfähiger Schichten oder Elektrolytkondensatoren.

Die im Folgenden aufgeführten Beispiele dienen der beispielhaften Erläuterung der Erfindung und sind nicht als Beschränkung aufzufassen.

### Beispiele

### Beispiel 1:

### Herstellung von 3,4-Ethylenoxythiathiophen (Thieno[3,4-b]-1,4-oxathian)

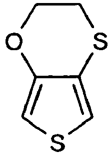

32,31 g (187,6 mmol) 3,4-Diethoxythiophen, 29,31 g (375,2 mmol) 2-Mercaptoethanol und 3,56 g (18,7 mmol) p-Toluolsulfonsäure-monohydrat wurden unter N₂-Atmosphäre in 400 ml Toluol 5 h unter Rückfluss erhitzt. Dabei wurden kontinuierlich Toluol und gebildetes Ethanol abgenommen und durch frisches Toluol ersetzt. Danach war gemäß dünnschichtchromatographischer Kontrolle die Umsetzung vollständig. Das Reaktionsgemisch wurde nach Abkühlen auf Raumtemperatur (23°C) filtriert und mit Wasser neutral gewaschen. Nach Trocknung über Natriumsulfat wurde das Gemisch bei 0,07 mbar destilliert (Sdp. 59 - 62°C) und das Destillat säulenchromatographisch über Silicagel weiter gereinigt (Laufmittel: Toluol).
Ausbeute: 15,99 g Thieno[3,4-b]-1,4-oxathian (= 53,9 % d. Theorie) als nahezu farbloses Öl
¹H-NMR (400 MHz) δ(CDCl₃, ppm): 6,72 (d, 1H, *J* = 3,55 Hz), 6,46 (d, 1H, *J* = 3,55 Hz), 4,37 (m, 2H), 3,00 (m, 2H).

### Beispiel 2:

### Herstellung von Methyl-3,4-ethylendioxythiathiophen (2-Methyl-thieno[3,4-b]-1,4-oxathian)

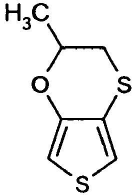

11,68 g (67,8 mmol) 3,4-Diethoxythiophen, 12,5 g (135,6 mmol) 1-Mercapto-2-propanol und 1,29 g (6,8 mmol) p-Toluolsulfonsäure-Monohydrat wurden unter N₂-Atmosphäre in 200 ml Toluol 10 h unter Rückfluss erhitzt. Die weitere Aufarbeitung erfolgt wie in Beispiel 1 beschrieben.

Ausbeute: 4,06 g 2-Methyl-thieno[3,4-b]-1,4-oxathian (= 34,8 % d. Th.) als gelbliches Öl
¹H-NMR (400 MHz) δ(CDCl₃, ppm): 6,72 (d, 1H, *J* = 3,54 Hz), 6,44 (d, 1H, *J* = 3,54 Hz), 4,33 (q und X-Teil von ABX, 1H, *J*_{X,CH3} = 6,2 Hz, *J*_{AX} = 1,9 Hz, *J*_{BX} = 9,0 Hz), 2,89 (B-Teil von ABX, 1H, *J*_{AB} = 13,1 Hz), 2,83 (A-Teil von ABX, 1H, *J*_{AB} = 13,1 Hz), 1,45 (d, 3H, *J*_{X,CH3} = 6,2 Hz).

Aus einer zweiten, verunreinigten Fraktion können säulenchromatographisch weitere ca. 1,5 g reines Produkt gewonnen werden, Gesamt-Reinausbeute 47,6 % d. Th.

### Beispiel 3 (erfindungsgemäß):

### Herstellung von erfmdungsgemäßen Kondensatoren unter Verwendung von Poly(3,4-ethylenoxythiathiophen) als Feststoffelektrolyt:

Tantalpulver mit einer spezifischen Kapazität von 50 000 µFV/g wurde zu Pellets gepresst und gesintert, um einen porösen Körper mit den Abmessungen 4 mm* 3 mm* 1.5 mm zu bilden. Die Pellets (Anoden) wurden in einem Phosphorsäureelektrolyten auf 30 V anodisiert.

Es wurde eine Lösung, bestehend aus einem Gewichtsteil 3,4-Ethylenoxythiathiophen (Thieno[3,4-b]-1,4-oxathian aus Beispiel 1) und 20 Gewichtsteilen einer 40 Gew.-%igen Lösung von Eisen(III)-p-toluolsulfonat in Ethanol (Baytron^{®} C-E, H.C. Starck GmbH) hergestellt.

Die Lösung wurde zur Imprägnierung der Anodenpellets verwendet. Die Anodenpellets wurden in dieser Lösung getränkt und anschließend für 30 min bei Raumtemperatur, 15 min bei 50°C und 15 min bei 150°C getrocknet. Nach der Temperaturbehandlung war die Lösung in den Pellets polymerisiert. Anschließend wurden die Pellets in Wasser 30 min lang gewaschen. Nach der Waschung wurden die Pellets in einer wässrigen 0,25 gewichtsprozentigen Lösung von p-Toluolsulfonsäure 30 min bei einer Spannung von 25 V reformiert. Die beschriebene Tränkung, Waschung und Reformierung wurden noch ein weiteres Mal durchgeführt. Abschließend wurden die Pellets mit einer Silberschicht überzogen.

### Zum Vergleich wurden Kondensatoren unter Verwendung von Poly(3,4-ethylendioxythiophen) als Feststoffelektrolyt hergestellt:

Dazu wurden wie oben ebenfalls Pellets hergestellt. Es wurde eine Lösung, bestehend aus einem Gewichtsteil 3,4-Ethylendioxythiophen (Baytron^{®} M, H.C. Starck GmbH) und 20 Gewichtsteilen einer 40 gew.-%igen Lösung von Eisen(III)-p-totuolsulfonat in Ethanol (Baytron^{®} C-E, H.C. Starck GmbH) hergestellt. Die Pellets wurden wie oben imprägniert, es wurden jedoch insgesamt drei Tränkungen durchgeführt.

Die Kondensatoren hatten folgende elektrischen Werte:

| | Erfindungsgemäß mit Poly(3,4-ethylenoxythiathiophen) | Mit Poly(3,4-ethylendioxythiophen) |
|---|---|---|
| Kapazität [µF] | 126 | 130 |
| Äquivalenter Serienwiderstand [mΩ] | 63 | 122 |
| Reststrom [µA] | 1,2 | 18,9 |

Die Kapazität wurde bei 120 Hz und der äquivalente Serienwiderstand bei 100 kHz mittels eines LCR Meters (Agilent 4284A) bestimmt. Der Reststrom wurde drei Minuten nach Anlegen einer 10 V Spannung mit einem Keithley 199 Multimeter bestimmt.

Die erfindungsgemäßen Kondensatoren haben bereits nach nur zwei Tränkungen die gleiche Kapazität wie die Kondensatoren mit Poly(3,4-ethylendioxythiophen) und sind folglich in weniger Prozessschritten herzustellen. Dabei haben sie jedoch einen deutlich niedrigeren äquivalenten Serienwiderstand und einen um eine Größenordnung niedrigeren Reststrom.

### Beispiel 4 (erfindungsgemäß):

### Herstellung einer erfmdungsgemäßen leitfähige Schicht enthaltend Poly(3,4-ethylenoxythiathiophen)durch chemische in situ-Polymerisation mit Fe-(III)-tosylat

1,11 Gewichtsteile 3,4-Ethylenoxythiathiophen aus Beispiel 1, 25 Gewichtsteile einer 40 % igen Lösung von Eisen-III-tosylat in n-Butanol (Baytron^{®} C-B 40, H. C. Starck GmbH) und 106 Gewichtsteile n-Butanol wurden gemischt. Die Lösung wurde mit 60 µm Nassfilm-Schichtdicke auf eine Glasplatte aufgerakelt und bei 23 °C 20 min getrocknet. Danach wurde der entstandene Film mit entionisiertem Wasser ausgewaschen und erneut getrocknet. Die erhaltene leitfähige blaue Schicht hatte einen Oberflächenwiderstand von 312 Ω/sq (gemessen nach der Zweipunktmethode).

### Beispiel 5 (erfindungsgemäß):

### Herstellung einer erfindungsgemäßen leitfähigen Schicht enthaltend erfindungsgemäßes Polythiophen durch chemische in situ-Polymerisation mit Fe-(III)-tosylat

1,21 Gewichtsteile Methyl-3,4-ethylenoxythiathiophen aus Beispiel 2, 25 Gewichtsteile einer 40 % igen Lösung von Eisen-III-tosylat in n-Butanol (Baytron^{®} C-B 40, H. C. Starck GmbH) und 106 Gewichtsteile n-Butanol wurden gemischt. Die Lösung wurde mit 60 µm Nassfilm-Schichtdicke auf eine Glasplatte aufgerakelt und bei 23°C 20 min getrocknet. Danach wurde der entstandene Film mit entionisiertem Wasser ausgewaschen und erneut getrocknet. Die erhaltene leitfähige blaue Schicht hatte einen Oberflächenwiderstand von 296 Ω/sq (gemessen nach der Zweipunktmethode).

### Beispiel 6 (erfindungsgemäß):

### Herstellung eines PSS-Komplexes des Copolymeren aus 3,4-Ethylendioxythiophen und 3,4-Ethylenoxythiathiophen

88,02 g einer 6,2 Gew-%igen wässrigen Lösung von Polystyrolsulfonsäure (PSS, entsprechend 5,46 g fester PSS entsprechend 29,7 mmol SO₃H, Molekulargewicht M_{w} ca. 180.000), 1,0 g 3,4-Ethylendioxythiophen (7,04 mmol), 1,114 g 3,4-Ethylenoxythiathiophen (2,3-Dihydrothieno[3,4-b][1,4]oxathiin aus Beispiel 1, 7,04 mmol) und 3,0 g Na₂S₂O₈ wurden in 350 ml Wasser für 8 h bei 23°C stark gerührt. Danach wurden weitere 1,7 g Na₂S₂O₈ zugegeben (insgesamt 4,7 g = 19,7 mmol) und weitere 16 h bei 23 °C gerührt. Danach wurde der tiefblaue Ansatz durch 8 h Rühren mit je 41 g Anionenaustauscher (Lewatit^{®} MP 62, Bayer AG) und Kationenaustauscher (Lewatit^{®} S 100, Bayer AG) entionisiert und die Ionenaustauscher anschließend abfiltriert. Für die entstehende tiefblaue erfindungsgemäße Dispersion wurde ein Feststoffgehalt von 1,15 Gew.-% ermittelt. 1,13 Gew.-Teile dieser Lösung wurden mit je 1 Gew.-Teil Methanol, Aceton und Wasser verdünnt und in einer Nassfilm-Schichtdicke von 60 µm auf eine PET-Folie aufgerakelt. Nach Trocknen der hellblauen, transparenten Schicht wurde ein Oberflächenwiderstand von 2 · 10⁵ Ω/sq gemessen (Zweipunktmethode).

## Patentansprüche

1. Elektrolytkondensator enthaltend
• eine Schicht eines oxidierbaren Metalls
• eine Oxidschicht dieses Metalls
• einen Feststoffelektrolyten
• Kontakte
**dadurch gekennzeichnet, dass** er als Feststoffelektrolyt Polythiophene mit wiederkehrenden Einheiten der allgemeinen Formel (I) oder wiederkehrenden Einheiten der allgemeinen Formeln (I) und (II), 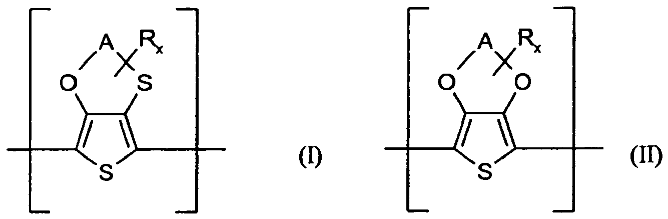 worin
A für einen gegebenenfalls substituierten C₁-C₅-Alkylenrest steht,
R für einen linearen oder verzweigten, gegebenenfalls substituierten C₁-C₁₈-Alkylrest, einen gegebenenfalls substituierten C₅-C₁₂-Cycloalkylrest, einen gegebenenfalls substituierten C₆-C₁₄-Arylrest, einen gegebenenfalls substituierten C₇-C₁₈-Aralkylrest, einen gegebenenfalls substituierten C₁-C₄-Hydroxyalkylrest oder einen Hydroxylrest steht,
x für eine ganze Zahl von 0 bis 8 steht und
für den Fall, dass mehrere Reste R an A gebunden sind, diese gleich oder unterschiedlich sein können, und gegebenenfalls Gegenionen enthält.

2. Elektrolytkondensator gemäß Anspruch 1, **dadurch gekennzeichnet, dass**
A für einen gegebenenfalls substituierten C₂-C₃-Alkylenrest steht,
x für 0 oder 1 steht und
R die in Anspruch 1 genannte Bedeutung hat.

3. Elektrolytkondensator gemäß Anspruch 1 oder 2, **dadurch gekennzeichnet, dass** wiederkehrende Einheiten der allgemeinen Formel (I) mit einem Anteil von 1 bis 100 Mol-% und wiederkehrende Einheiten der allgemeinen Formel (II) mit einem Anteil von 99 bis 0 Mol-% im Polythiophen enthalten sind, mit der Maßgabe, dass die Summe beider Anteile 100 Mol-% ergibt.

4. Elektrolytkondensator gemäß wenigstens einem der Ansprüche 1 bis 3, **dadurch gekennzeichnet, dass** die wiederkehrenden Einheiten der allgemeinen Formel (I) oder der allgemeinen Formeln (I) und (II) wiederkehrende Einheiten der allgemeinen Formel (Iaa) oder der allgemeinen Formeln (Iaa) und (IIaa) 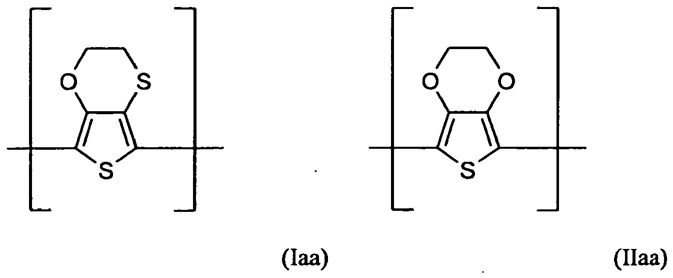 sind.

5. Elektrolytkondensator gemäß wenigstens einem der Ansprüche 1 bis 4, **dadurch gekennzeichnet, dass** es sich bei dem oxidierbaren Metall um ein Ventilmetall oder eine Verbindung mit vergleichbaren Eigenschaften handelt.

6. Elektrolytkondensator gemäß Anspruch 5, **dadurch gekennzeichnet, dass** es sich bei dem Ventilmetall oder der Verbindung mit vergleichbaren Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

7. Elektrolytkondensator gemäß wenigstens einem der Ansprüche 1 bis 6, **dadurch gekennzeichnet, dass** es sich bei den Gegenionen um monomere oder polymere Anionen handelt.

8. Verfahren zur Herstellung eines Elektrolytkondensators gemäß wenigstens einem der Ansprüche 1 bis 7, **dadurch gekennzeichnet, dass** Thiophene der allgemeinen Formel (III) oder eine Mischung aus Thiophenen der allgemeinen Formeln (III) und (IV), 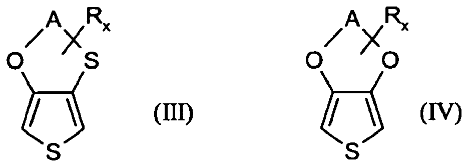 worin
A, R und x die in wenigstens einem der Ansprüche 1 oder 2 genannte Bedeutung haben,
ein Oxidationsmittel und gegebenenfalls Gegenionen, zusammen oder nacheinander gegebenenfalls in Form von Lösungen auf eine Oxidschicht eines Metalls aufgebracht und chemisch oxidativ zu den Polythiophenen mit wiederkehrenden Einheiten der allgemeinen Formel (I) oder wiederkehrenden Einheiten der allgemeinen Formeln (I) und (II), 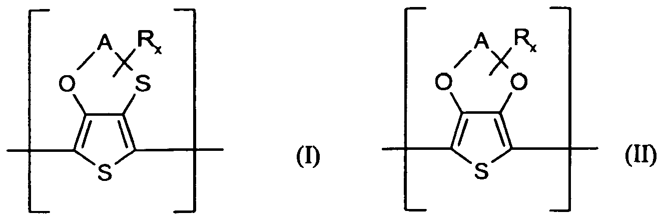 worin
A, R und x die in wenigstens einem der Ansprüche 1 oder 2 genannte Bedeutung haben,
bei Temperaturen von -10°C bis 250°C polymerisiert werden oder
dass Thiophene der allgemeinen Formel (III) oder eine Mischung aus Thiophenen der allgemeinen Formeln (III) und (IV) und Gegenionen gegebenenfalls aus Lösung durch elektrochemische Polymerisation zu den Polythiophenen mit wiederkehrenden Einheiten der allgemeinen Formel (I) oder wiederkehrenden Einheiten der allgemeinen Formeln (I) und (II) bei Temperaturen von -78°C bis 250°C auf eine Oxidschicht eines Metalls aufgebracht werden.

9. Verfahren gemäß Anspruch 8, **dadurch gekennzeichnet, dass** als Oxidationsmittel Alkali- oder Ammoniumperoxodisulfate, Wasserstoffperoxid, Alkaliperborate, Eisen-III-salze organischer Säuren, Eisen-III-salze anorganischer Säuren oder Eisen-III-salze anorganischer Säuren, welche organische Reste aufweisen, verwendet werden.

10. Verfahren gemäß Anspruch 8 oder 9, **dadurch gekennzeichnet, dass** es sich bei den Gegenionen um Anionen von monomeren Alkan- oder Cycloalkansulfonsäuren oder aromatischen Sulfonsäuren handelt.

11. Verfahren gemäß wenigstens einem der Ansprüche 8 bis 10, **dadurch gekennzeichnet, dass** die die Polythiophene enthaltende Schicht nach der Polymerisation und gegebenenfalls nach Trocknung mit geeigneten Lösungsmitteln gewaschen wird.

12. Verfahren gemäß wenigstens einem der Ansprüche 8 bis 11, **dadurch gekennzeichnet, dass** die Oxidschicht des Metalls nach der Polymerisation elektrochemisch nachanodisiert wird (Reformierung).

13. Verwendung von Polythiophenen mit wiederkehrenden Einheiten der allgemeinen Formel (I) oder wiederkehrenden Einheiten der allgemeinen Formeln (I) und (II), 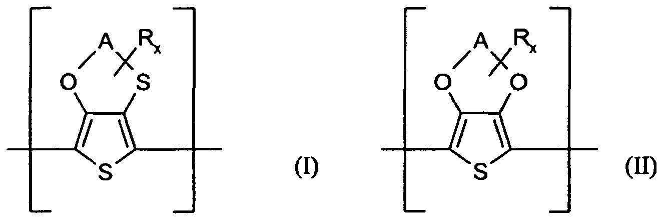 worin
A, R und x die in wenigstens einem der Ansprüche 1 oder 2 genannte Bedeutung haben,
und gegebenenfalls Gegenionen als Feststoffelektrolyte in Elektrolyt-Kondensatoren.

## Claims

1. Electrolytic capacitor comprising
• a layer of an oxidizable metal
• an oxide layer of this metal
• a solid electrolyte
• contacts
**characterized in that** it comprises as the solid electrolyte polythiophenes with recurring units of the general formula (I) or recurring units of the general formulae (I) and (II) 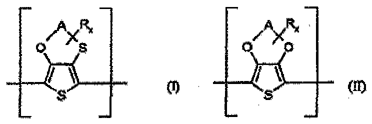 wherein
A represents an optionally substituted C₁-C₅-alkylene radical,
R represents a linear or branched, optionally substituted C₁-C₁₈-alkyl radical, an optionally substituted C₅-C₁₂-cycloalkyl radical, an optionally substituted C₆-C₁₄-aryl radical, an optionally substituted C₇-C₁₈-aralkyl radical, an optionally substituted C₁-C₄-hydroxyalkyl radical or a hydroxyl radical,
x represents an integer from 0 to 8 and
in the case where several radicals R are bonded to A, these can be identical or different, and optionally counter-ions.

2. Electrolytic capacitor according to claim 1, **characterized in that**
A represents an optionally substituted C₂-C₃-alkylene radical,
x represents 0 or 1 and
R has the meaning given in claim 1.

3. Electrolytic capacitor according to claim 1 or 2, **characterized in that** the polythiophene contains recurring units of the general formula (I) with a content of from 1 to 100 mol% and recurring units of the general formula (II) with a content of from 99 to 0 mol%, with the proviso that the sum of the two contents is 100 mol%.

4. Electrolytic capacitor according to at least one of claims 1 to 3, **characterized in that** the recurring units of the general formula (I) or of the general formulae (I) and (II) are recurring units of the general formula (Iaa) or of the general formulae (Iaa) and (IIaa)

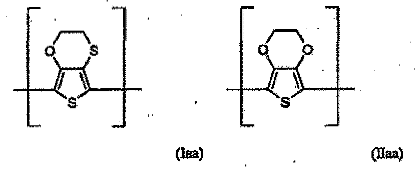

5. Electrolytic capacitor according to at least one of claims 1 to 4, **characterized in that** the oxidizable metal is a valve metal or a compound with comparable properties.

6. Electrolytic capacitor according to claim 5, **characterized in that** the valve metal or the compound with comparable properties is tantalum, niobium, aluminium, titanium, zirconium, hafnium, vanadium, an alloy or compound of at least one of these metals with other elements, NbO or an alloy or compound of NbO with other elements.

7. Electrolytic capacitor according to at least one of claims I to 6, **characterized in that** the counter-ions are monomeric or polymeric anions.

8. Process for the production of an electrolytic capacitor according to at least one of claims 1 to 7, **characterized in that** thiophenes of the general formula (III) or a mixture of thiophenes of the general formulae (III) and (IV) 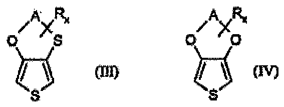 wherein
A, R and x have the meaning given in at least one of claims 1 or 2,
an oxidizing agent and optionally counter-ions, together or successively, optionally in the form of solutions, are applied to an oxide layer of a metal and are subjected to chemical and oxidative polymerization to give the polythiophenes with recurring units of the general formula (I) or recurring units of the general formulae (I) and (II) 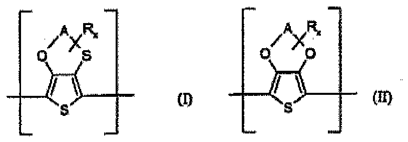 wherein
A, R and x have the meaning given in at least one of claims 1 or 2,
at temperatures of from -10 °C to 250 °C, or
**in that** thiophenes of the general formula (III) or a mixture of thiophenes of the general formulae (III) and (IV) and counter-ions are applied to an oxide layer of a metal, optionally from solution, by electrochemical polymerization to give the polythiophenes with recurring units of the general formula (I) or recurring units of the general formulae (I) and (II) at temperatures of from -78 °C to 250 °C.

9. Process according to claim 8, **characterized in that** alkali metal or ammonium peroxodisulphates, hydrogen peroxide, alkali metal perborates, iron(III) salts of organic acids, iron(III) salts of inorganic acids or iron(III) salts of inorganic acids which contain organic radicals are used as oxidizing agents.

10. Process according to claim 8 or 9, **characterized in that** the counter-ions are anions of monomeric alkane- or cycloalkanesulphonic acids or aromatic sulphonic acids.

11. Process according to at least one of claims 8 to 10, **characterized in that** the layer containing the polythiophenes is washed with suitable solvents after the polymerization and optionally after drying.

12. Process according to at least one of claims 8 to 11, **characterized in that** the oxide layer of the metal is after-anodized electrochemically (reforming) after the polymerization.

13. Use of polythiophenes with recurring units of the general formula (I) or recurring units of the general formulae (I) and (II) 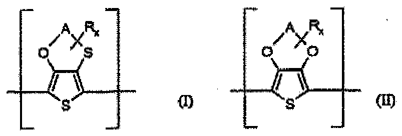 wherein
A, R and x have the meaning given in at least one of claims I or 2,
and optionally counter-ions as solid electrolytes in electrolytic capacitors.

## Revendications

1. Condensateur électrolytique, contenant :
- une couche d'un métal oxydable
- une couche d'oxyde de ce métal
- un électrolyte solide
- des contacts
**caractérisé en ce qu'**il contient en tant qu'électrolyte solide des polythiophènes contenant des unités de répétition de formule générale (I) ou des unités de répétition de formules générales (I) et (II) 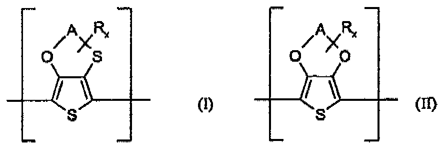 dans lesquelles
A représente un radical alkylène en C₁-C₅ éventuellement substitué,
R représente un radical alkyle en C₁-C₁₈ linéaire ou ramifié, éventuellement substitué, un radical cycloalkyle en C₅-C₁₂ éventuellement substitué, un radical aryle en C₆-C₁₄ éventuellement substitué, un radical aralkyle en C₇-C₁₈ éventuellement substitué, un radical hydroxyalkyle en C₁-C₄ éventuellement substitué ou un radical hydroxyle,
x représente un nombre entier de 0 à 8, et
lorsque plusieurs radicaux R sont reliés à A, ceux-ci peuvent être identiques ou différents, et éventuellement des contre-ions.

2. Condensateur électrolytique selon la revendication 1, **caractérisé en ce que**
A représente un radical alkylène en C₂-C₃ éventuellement substitué,
x représente 0 ou 1, et
R a la signification donnée dans la revendication 1.

3. Condensateur électrolytique selon la revendication 1 ou 2, **caractérisé en ce que** des unités de répétition de formule générale (I) sont contenues en une proportion de 1 à 100 % en moles et des unités de répétition de formule générale (II) en une proportion de 99 à 0 % en moles dans le polythiophène, à condition que la somme des deux proportions soit de 100 % en moles.

4. Condensateur électrolytique selon au moins l'une quelconque des revendications 1 à 3, **caractérisé en ce que** les unités de répétition de formule générale (I) ou de formules générales (I) et (II) sont des unités de répétition de formule générale (Iaa) ou de formules générales (Iaa) et (IIaa)

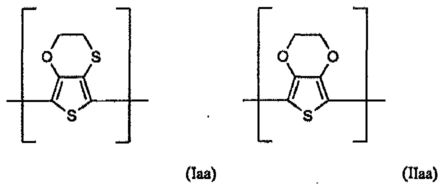

5. Condensateur électrolytique selon au moins l'une quelconque des revendications 1 à 4, **caractérisé en ce que** le métal oxydable est un métal valve ou un composé présentant des propriétés comparables.

6. Condensateur électrolytique selon la revendication 5, **caractérisé en ce que** le métal valve ou le composé présentant des propriétés comparables est le tantale, le niobium, l'aluminium, le titane, le zirconium, l'hafnium, le vanadium, un alliage ou composé d'au moins un de ces métaux avec d'autres éléments, NbO ou un alliage ou composé de NbO avec d'autres éléments.

7. Condensateur électrolytique selon au moins l'une quelconque des revendications 1 à 6, **caractérisé en ce que** les contre-ions sont des anions monomères ou polymères.

8. Procédé de fabrication d'un condensateur électrolytique selon au moins l'une quelconque des revendications 1 à 7, **caractérisé en ce que** des thiophènes de formule générale (III) ou un mélange de thiophènes de formules générales (III) et (IV) 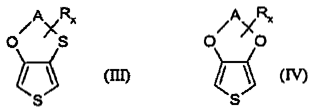 dans lesquelles
A, R et x ont la signification donnée dans au moins l'une quelconque des revendications 1 ou 2,
un oxydant et éventuellement des contre-ions sont appliqués ensemble ou successivement, éventuellement sous la forme de solutions, sur une couche d'oxyde d'un métal et polymérisés par oxydation chimique en les polythiophènes contenant des unités de répétition de formule générale (I) ou des unités de répétition de formules générales (I) et (II) 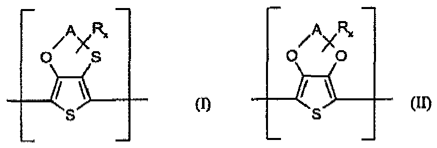 dans lesquelles
A, R et x ont la signification donnée dans au moins l'une quelconque des revendications 1 ou 2,
à des températures de -10 °C à 250 °C, ou
**en ce que** des thiophènes de formule générale (III) ou un mélange de thiophènes de formules générales (III) et (IV) et des contre-ions sont appliqués sur une couche d'oxyde d'un métal à des températures de -78 °C à 250 °C, éventuellement à partir d'une solution, par polymérisation électrochimique pour former les polythiophènes contenant des unités de répétition de formule générale (I) ou des unités de répétition de formules générales (I) et (II).

9. Procédé selon la revendication 8, **caractérisé en ce que** des peroxodisulfates d'alcalis ou d'ammonium, du peroxyde d'hydrogène, des perborates d'alcalis, des sels de fer III d'acides organiques, des sels de fer III d'acides inorganiques ou des sels de fer III d'acides inorganiques comprenant des radicaux organiques, sont utilisés en tant qu'oxydant.

10. Procédé selon la revendication 8 ou 9, **caractérisé en ce que** les contre-ions sont des anions d'acides alcane- ou cycloalcane-sulfoniques monomères ou d'acides sulfoniques aromatiques.

11. Procédé selon au moins l'une quelconque des revendications 8 à 10, **caractérisé en ce que** la couche contenant les polythiophènes est lavée avec des solvants appropriés après la polymérisation et éventuellement après le séchage.

12. Procédé selon au moins l'une quelconque des revendications 8 à 11, **caractérisé en ce que** la couche d'oxyde du métal est post-anodisée électrochimiquement (reformage) après la polymérisation.

13. Utilisation de polythiophènes contenant des unités de répétition de formule générale (I) ou des unités de répétition de formules générales (I) et (II) 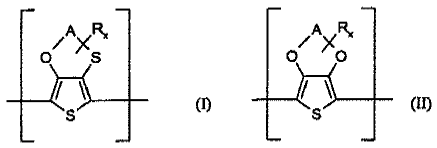 dans lesquelles
A, R et x ont la signification donnée dans au moins l'une quelconque des revendications 1 ou 2,
et éventuellement de contre-ions en tant qu'électrolytes solides dans des condensateurs électrolytiques.
